# EUROPÄISCHE PATENTSCHRIFT

(11) **EP 1 979 646 B1**
(45) Veröffentlichungstag und Bekanntmachung des Hinweises auf die Patenterteilung: **28.10.2009**
(21) Anmeldenummer: 06830459.1
(22) Anmeldetag: 08.12.2006
(51) Int. Cl.: F16F 9/05

(54) **LUFTFEDER- UND DÄMPFEREINHEIT MIT ZUGANSCHLAG**
AIR SPRING AND DAMPER UNIT WITH EXTENSION STOP
UNITE DE SUSPENSION ET D'AMORTISSEUR PNEUMATIQUE A BUTEE DE TRACTION

(30) Priorität: 20.01.2006 DE 102006002779; 15.02.2006 DE 102006007000
(43) Veröffentlichungstag der Anmeldung: 15.10.2008
(73) Patentinhaber: Continental Aktiengesellschaft, 30165 Hannover (DE)
(72) Erfinder: BEHMENBURG, Christoph, 31867 Lauenau (DE); GLEU, Jens-Uwe, 30855 Langenhagen (DE); JOB, Heinz, 31535 Neustadt (DE); DEITERS, Detlef, 31157 Sarstedt (DE); HOINKHAUS, Hermann, 30938 Burgwedel (DE); WENGER, Klaus, 31552 Apelern (DE)
(74) Vertreter: Finger, Karsten
(86) Internationale Anmeldenummer: PCT/EP2006/069455
(87) Internationale Veröffentlichungsnummer: WO 2007/087926

(56) Entgegenhaltungen:
- EP-A2- 1 457 362
- DE-U1-202005 012 148

## Beschreibung

Die Erfindung betrifft eine Luftfeder- und Dämpfereinheit für Fahrwerke von Fahrzeugen mit mindestens zwei mit Druckluft gefüllten und teilweise durch Rollbälge begrenzten Arbeitsräumen, wobei die Arbeitsräume übereinander und innerhalb eines gemeinsamen topfförmigen rotationssymmetrischen Gehäuses angeordnet sind, wobei ein innerhalb des rotationssymmetrischen Gehäuses axial beweglicher und am Kopfende einer Kolbenstange befindlicher rotationssymmetrischer Kolben die Arbeitsräume trennt, wobei die Arbeitsräume untereinander über im Kolben befindliche durchströmbare Drosselventile verbunden sind, so dass ein Arbeitsraum auf der Kolbenvorderseite und ein Arbeitsraum auf der Kolbenrückseite angeordnet ist und die Kolbenstange teilweise umgibt, dass der Kolben und die Kolbenstange jeweils durch Rollbälge innerhalb des Gehäuses abgedichtet und geführt werden, wobei zwischen Kolben und rotationssymmetrischem Gehäuse ein zur Kolbenvorderseite abdichtender erster Rollbalg sowie ein zur Kolbenrückseite abdichtender zweiten Rollbalg angeordnet ist, und dass zwischen Kolbenstange und rotationssymmetrischem Gehäuse ein vom Kolben beabstandeter dritter Rollbalg angeordnet ist, wobei zwischen Kolben und Gehäuse eine auf die Kolbenvorderseite wirkende Zusatzfeder als Druckanschlag und eine auf die Kolbenrückseite wirkende Zusatzfeder als Zuganschlag ausgebildet sind (siehe EP-A- 1457362).

Eine solche Luftfeder- und Dämpfereinheit weist auch bei hohen Belastungen eine geringe Baugröße auf und vermeidet durch das Abtrennen und Dichten des Kolbens und der Kolbenstange jeweils durch Rollbälge innerhalb des rotationssymmetrischen Gehäuses jede merkbare Reibung und sorgt für ein sofortiges und komfortables "Anspringen". Zusätzlich erlaubt die Anordnung innerhalb eines einzigen gemeinsamen topfförmigen und rotationssymmetrischen Gehäuses eine gegenüber rauen Umgebungsbedingungen erleichterte Kapselung, z. B. mittels Faltenbälgen zwischen zylindrischem Gehäuse und Kolbenstange oder Anschlusspunkten.

Ein mit drei auf solche Art angeordneten Bälgen ausgebildete Luftfeder- Dämpfereinheit (3-Balg-Dämpfer) erlaubt eine präzise und sichere Führung des Kolbens und der Kolbenstange, also des z.B. mit dem Fahrwerk verbundenen Teils der Luftfeder- und Dämpfereinheit, innerhalb des topfförmigen zylindrischen Gehäuses, was dann mit der Karosserie verbunden ist. Hierdurch lassen sich auch auf die Luftfeder- und Dämpfereinheit einwirkende Querkräfte, d.h. Fahrwerkskräfte normal zur Achse der Luftfeder- und Dämpfereinheit übertragen, was mit üblichen Luftfeder-Dämpfungssystemen nur bedingt möglich ist.

Durch die kompakte und zu üblichen Federelemente mit hydraulischen Dämpfern unterschiedliche Bauweise solcher 3-Balg-Luftdämpfer ergeben sich jedoch insbesondere durch die Möglichkeit der Querkraftaufnahme und die dazu eng geführten Rollfalten Schwierigkeiten in der Ausführung und Auslegung des Zuganschlages. Während beim Druckanschlag, d.h. bei der Zusatzfeder für das Einfedern der Karosserie bis auf Anschlag bei dieser Bauart genügend Bauraum zur Verfügung steht, gestaltet sich die Einbausituation beim Zuganschlag, d.h. bei der Zusatzfeder für das Ausfedern der Karosserie bis auf Anschlag wesentlich schwieriger. Herkömmliche Zuganschläge sind oft nicht in der Lage, die entstehenden Kräfte aufzufangen oder benötigen einen Bauraum, der hier nicht gegeben ist.

Einen Endanschlag für den Einsatz im Zusammenspiel mit Stahlfedern offenbart die DE 20 2005 012 148 U1. Dieser Endanschlag ist mit einem Topf versehen, der wie ein Korsett den Endanschlag in einem bestimmten Bereich umgibt, dort eine Federung verhindert und im Übrigen den Zuganschlag in einen Bereich zur Aufnahme der Federwindung und einen anderen Bereich zur Federung beim Anschlag teilt. Dieser Endanschlag kann jedoch hierbei durch seine spezielle Ausbildung für den Einbau innerhalb einer Feder und für die Aufnahme der Federwindungen nur als Druckanschlag genutzt werden. Auch für die Anwendung im Zusammenhang mit einer Luftfeder-Dämpfereinheit könnte so ein Endanschlag unter konstruktiver Anpassung nur als Druckanschlag, d.h. als auf die Kolbenvorderseite wirkende Zusatzfeder im oberen Arbeitsraum genutzt werden.

Für die Erfindung bestand daher die Aufgabe, eine Luftfeder- und Dämpfereinheit mit einem Zuganschlag bereitzustellen, der eine hohe Lastaufnahmefähigkeit aufweist, der auf Lebensdauer knicksicher und elastisch als Endanschlag einsetzbar ist, der kostengünstig herstellbar ist und der in einem begrenzten Bauraum montagefreundlich einzubringen ist und bei der der Zuganschlag als federnde Kraftaufnahme in seiner Weg-Kraft Kennlinie / Federkennlinie auf einfache Weise an unterschiedliche Fahrzeugausführungen anpassbar ist.

Gelöst wird diese Aufgabe durch die Merkmale des Hauptanspruchs. Vorteilhafte Ausbildungen sind in den Unteransprüchen enthalten.

Dabei ist der Zuganschlag im Wesentlichen als gestufter, hohlzylindrischer und die Kolbenstange umgebender Federkörper ausgebildet. Der Zuganschlag weist an seinem kolbenseitigen Ende einen ersten Außendurchmesser auf und ist an der Kolbenrückseite und / oder an den benachbarten Bereichen der Kolbenstange befestigt. Der Zuganschlag weist weiterhin an seinem kolbenfernen Ende einen zweiten größeren Außendurchmesser zur Anlage an eine mit dem Gehäuse verbundene Zuganschlagsplatte auf, wobei im Durchmesserübergangsbereich des Zuganschlages Verstärkungselemente angeordnet sind. Durch eine solche Ausbildung ist der Zuganschlag speziell auf die Ausbildung eines 3-Balg Dämpfers angepasst, stellt die erforderliche schmale Auflage bzw. Kraftaufnahmefläche im Bereich der Kolbenanbindung zur Verfügung und ist trotzdem in der Lage, große Kräfte zwischen Kolben und Gehäuse zu übertragen.

Eine vorteilhafte Ausbildung besteht darin, dass als Verstärkungselement im Durchmesserübergangsbereich und innerhalb des Zuganschlages eine ringförmige Scheibe aus im Vergleich zum Zuganschlag unelastischem Material angeordnet ist. Hierdurch ergibt sich eine besonders einfache Herstellung des Zuganschlages aus einfachen Dreh- oder Press- oder Schäumteilen.

Eine weitere vorteilhafte Ausbildung besteht darin, dass der Innendurchmesser der Scheibe im Wesentlichen dem kleinsten Innendurchmesser des Zuganschlages und der Außendurchmesser der Scheibe im Wesentlichen dem größten Außendurchmesser des Zuganschlages entspricht. Hierdurch ergibt sich ein besonders einfach aufgebauter Schichtkörper, bei dem die einzelnen Teile leicht miteinander verbunden werden können, beispielsweise durch Kleben.

Eine weitere vorteilhafte Ausbildung besteht darin, dass die Scheibe aus Stahl besteht und durch Vulkanisation im Zuganschlag eingebettet ist. Hierdurch ergibt sich eine besonders haltbare Verbindung zwischen Zuganschlag und Verstärkungselement.
Anstelle einer Scheibe aus Stahl können auch Scheiben aus Aluminium oder faserverstärktem Kunststoff eingebettet werden. Versuche haben aber gezeigt, dass gängige Aluminiumlegierungen die auftretenden Spannungen nur dann aushalten, wenn die Scheibe sehr dick ausgeführt wird. Dann aber wird die Bauhöhe doch stark beeinflusst.

Vorteilhafterweise besteht der Zuganschlag aus Schaumkunststoff und weist im Bereich des ersten Außendurchmessers Form- und/oder Materialunstetigkeiten zur Veränderung der Federkennlinie des Zuganschlages auf. Damit ist die Federkennlinie des Zuganschlages auf einfache Weise durch relativ geringe konstruktive Veränderungen beeinflussbar und kann leicht auf die Fahrzeugeigenschaften, so etwa auf Fahrzeuggewicht und Achskonstruktion eingestellt werden. Durch eine solche Ausbildung ist der Zuganschlag speziell auf die Ausbildung eines 3-Balg Dämpfers angepasst, stellt die erforderliche schmale Auflage bzw. Kraftaufnahmefläche im Bereich der Kolbenanbindung zur Verfügung, ist trotzdem in der Lage, große Kräfte zwischen Kolben und Gehäuse zu übertragen, und kann leicht auf unterschiedliche Fahrzeugtypen angepasst werden.

Dabei galt bisher eine Kennliniengestaltung des Zuganschlages (Ausfederkennlinie) generell als sehr schwierig. Dies betrifft vor allem das Setz- und Knickverhalten, die Anlauffedersteifigkeit, den Federratenverlauf sowie die Abstimmung eines solchen Federkörpers.

Das Besondere bei der hier vorliegenden erfindungsgemäßen Ausführung, ist die Festlegung von vorher entwickelten rein geometrischen Gestaltungsrichtlinien als Zusatzmaßnahmen zur Gestaltung der Kraft-Weg-Kennlinie von Ringschaumköipern. Unter dem Begriff "geometrische Gestaltungsrichtlinien" ist hier zu verstehen, dass der Zuganschlag durch die Angabe von Abmessungen, beispielsweise solche von eingeschnittenen Nuten, oder durch die Angabe von Abmessungsbereichen, beispielsweise solche von Bereichen, in denen ein härteres Material, ein härterer Schaum vorgesehen sind, bereits ausreichend dimensioniert und fahrzeugspezifisch angepasst werden kann. Aus der Kraft-Weg-Kennlinie leitet sich dann die Steifigkeitskennlinie ab, für die vor dem Hintergrund einer genauen Anpassung an das Fahrzeug unter anderem hohe Anforderungen an eine niedrige Anlaufsteifigkeit sowie einen streng monoton steigenden Kennlinienverlauf bestehen.

Eine vorteilhafte Ausbildung besteht darin, dass der Zuganschlag im Bereich des ersten Außendurchmessers Querschnittsveränderungen in Form von Umfangskerben oder -nuten aufweist. Durch solche Nuten oder Kerben verschiedener Form und Größe, etwa im Querschnitt dreieckige, trapezförmige, rechteckige, runde oder kurvenförmige Kerben oder Nuten in einfacher oder mehrfacher Anordnung lässt sich das Federungsverhalten in sehr weiten Grenzen beeinflussen und durch entsprechende Formgebung sogar sprungartig verändern. So kann zum Beispiel eine im Querschnitt dreieckige Nut, die im Nutgrund eine "Dreiecksspitze" aufweist und bei steigender Belastung zunächst für ein weiches Anfedern des Zuganschlages sorgt, soweit zusammengedrückt werden, dass ihre die Dreiecksschenkel bildenden Wände aneinander gedrückt werden und somit die Nut schließen. Dann ergibt sich ein sprungartige Verhärtung des Zuganschlages und ein exponentielles Ansteigen der Kraft-Weg-Kennlinie.

Eine weitere vorteilhafte Ausbildung besteht darin, dass im Bereich des ersten Außendurchmessers den Zuganschlag umgebende und im Vergleich zu letzterem weniger elastische Stützringe angeordnet sind. Durch Variationen der Stützringanzahl, der Querschnittsform und Größe sowie des Materials mit seinen Eigenschaften können erhebliche Kennlinien-Veränderungen dargestellt werden. Sogar eine gezielte Beeinflussung der Kennlinie auch und insbesondere im Hinblick auf das Blockmaß ist möglich.

Eine weitere vorteilhafte Ausbildung besteht darin, dass die Stützringe aus Stahl bestehen und durch Vulkanisation im Außenbereich des ersten Außendurchmessers des Zuganschlages eingebettet sind. Hierdurch ergibt sich eine besonders haltbare Verbindung zwischen Zuganschlag und Stützring. Anstelle eines Stützringes aus Stahl können auch Stützringe aus Aluminium oder faserverstärktem Kunststoff eingebettet werden.

Eine weitere vorteilhafte Ausbildung besteht darin, dass die Stützringe in den Umfangskerben- oder -nuten angeordnet sind. Hierdurch erreicht man ebenfalls die bereits geschilderten Vorteile und benötigt gleichzeitig nur ein Minimum an Bauraum, da der Stützring in der Nut verschwindet. Selbstverständlich können solche Stützringe auch lediglich durch Klemmung oder Wicklung auf den Schaumkörper aufgebracht werden, auch durch Klebung oder durch schraubenförmiges Wickeln eines Drahtes über einen bestimmten Bereich des Zuganschlages. In der letzteren Version ergibt sich dann eine Art Bandage, die Teilbereiche des Zuganschlages bei entsprechendem Wicklungszug verhärtet.

Anhand eines Ausführungsbeispieles soll die Erfindung näher erläutert werden. Es zeigen:
- Fig. 1: eine Luftfeder- und Dämpfereinheit für ein Fahrwerk
- Fig. 2 -6: Varianten des Ausbildung des Zuganschlages einer erfindungsgemäßen Luftfeder- und Dämpfereinheit
- Fig. 7: Einfluss einer sich ändernden Stützringkontur auf die Kennlinie des Zuganschlages

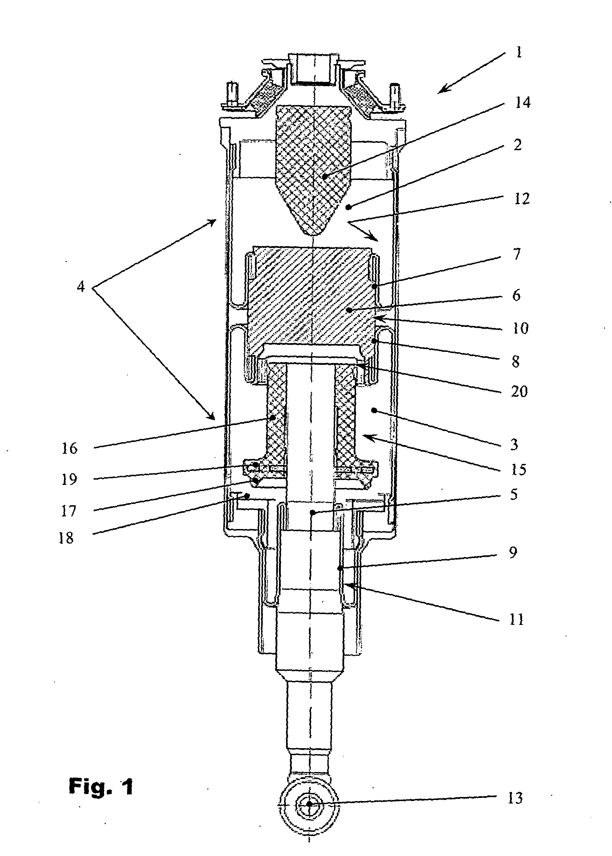

Die Fig. 1 zeigt eine erfindungsgemäße Luftfeder- und Dämpfereinheit 1 für ein Fahrwerk eines luftgefederten Personenkraftwagens. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrische ausgebildeten Gehäuse 4 angeordnet und durch einen am Kopfende einer Kolbenstange 5 befindlichen, rotationssymmetrisch ausgebildeten Kolben 6 getrennt. Der Kolben 6 ist innerhalb des zylindrischen Gehäuses 4 axial beweglich. Innerhalb des Kolbens 6 sind hier nicht näher dargestellte steuerbare Drosselventile angeordnet, über die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet.

Ein zwischen dem Ende des zylindrischen Gehäuses und dem unteren Anschlußpunkt 13 zum Fahrwerk befindlicher Faltenbalg zum Schutz gegen Umgebungsbedingungen ist hier nicht näher dargestellt.

Die Luftfeder- und Dämpfereinheit weist einen federnd ausgebildeten Druckanschlag 14 auf, ausgebildet als Polyurethanschaumkörper.

Die Luftfeder- und Dämpfereinheit weist weiterhin einen federnd ausgebildeten Zuganschlag 15 auf, der die Kolbenstange umgibt. Der Zuganschlag 15 ist dabei als gestufter hohlzylindrischer Federkörper ausgebildet und weist an seinem kolbenseitigen Ende einen hohlen Federzylinder 16 aus Polyurethanschaum auf. Der Federzylinder 16 ist im Außendurchmesser kleiner als der Außendurchmesser des hohlen Federkragens 17, ebenfalls aus Polyurethanschaum, der am kolbenfernen Ende des Zuganschlages angeordnet ist und im Falle eines Anschlagens zur Anlage an eine mit dem Gehäuse verbundene Zuganschlapsplatte 18 gelangt. Im Durchmesserübergangsbereich des Zuganschlages ist als Verstärkungselement eine ringförmige Stahlscheibe 19 angeordnet. Das Material (Polyurethanschaum) des Federzylinder 16 weist dabei wiederum in seinem kolbennäheren Bereich eine größere Härte auf als in seinem kolbenferneren Bereich nahe des Durchmesserüberganges und ist somit mit einer materialbedingten Unstetigkeit versehen.

Der Zuganschlag 15 ist am oberen Ende seines Federzylinders 16 über eine Klemmverbindung 20 mit dem Kolben verbunden. Durch die hier gezeigte Ausführung ergibt sich eine hohe Lastaufnahmefähigkeit und Knicksicherheit für den Zuganschlag auch innerhalb des sehr begrenzten Bauraums.

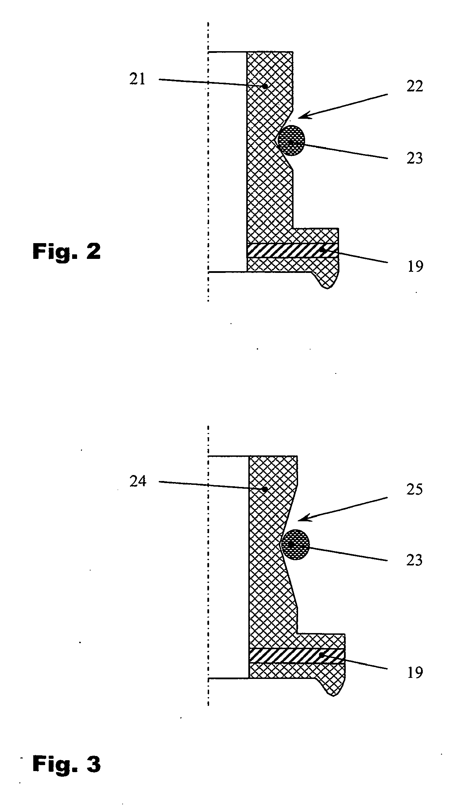

Die Fig.2 bis 6 zeigen nun verschiedene formbasierte Varianten der Ausbildung eines Zuganschlages aus Polyurethanschaum gleichmäßiger Härte einer erfindungsgemäßen Luftfeder- und Dämpfereinheit für Fahrwerke von Fahrzeugen. Selbstverständlich können gemäß der erfinderischen Lehre materialbedingte und formbedingte Unstetigkeiten kombiniert werden.

Dabei zeigt die Fig. 2 zunächst einen Zuganschlag 21 im Halbschnitt in einer Ausführung mit einer einfachen Dreieckskerbe 22 mit eingelegtem Stützring 23 . Hierdurch wird die Blocklänge vergrößert, d.h. der Zuganschlag bzw. der Zuganschlagsfederkörper geht früher in den Anschlag und die Zuganschlagsfeder ist insgesamt verhärtet.

Die Fig. 3 zeigt einen Zuganschlag 24 im Halbschnitt in einer Ausführung mit einer langen Dreieckskerbe 25 mit eingelegtem Stützring 23. Hierdurch wird auch die Blocklänge vergrößert, jedoch die Zuganschlagsfeder insgesamt mit einer relativ weichen Kennlinie ausgestattet.

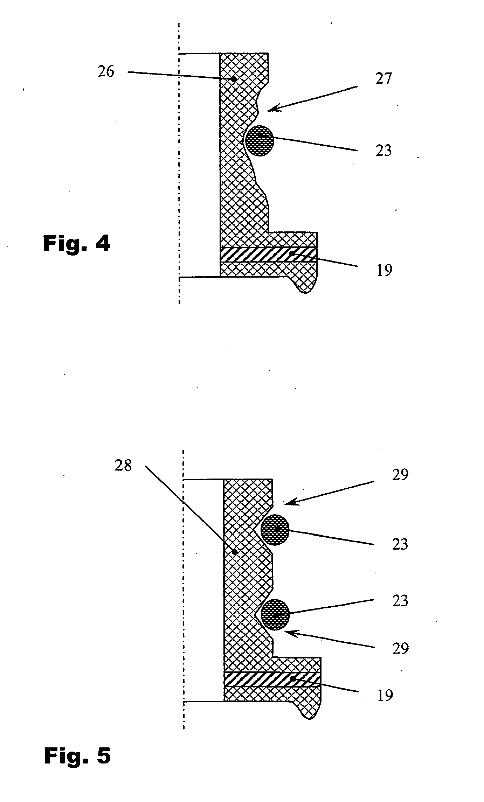

Die Fig. 4 zeigt einen Zuganschlag 26 im Halbschnitt in einer Ausführung mit einer Nut 27 mit kurvenförmigem Nutgrund und eingelegtem Stützring 23. Hierdurch wird das Anlaufverhalten oder Anschlagsverhalten insgesamt in eine "weichere" Richtung geschoben.

Die Fig. 5 zeigt einen Zuganschlag 28 im Halbschnitt in einer Ausführung mit einer Doppelnut / Doppelkerbe 29 und jeweils eingelegten Stützringen 23. Hierdurch wird die Blocklänge vergrößert, d.h. der Federweg verkürzt, während sich jedoch die Kennlinie der Zuganschlagsfeder in ihrem Anlaufbereich kaum verändert.

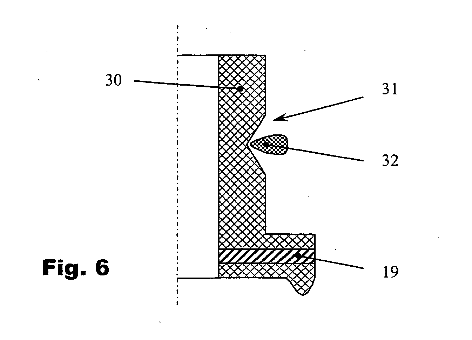

Die Fig. 6 zeigt einen Zuganschlag 30 im Halbschnitt in einer Ausführung mit einer kurzen Dreieckskerbe 31 mit eingelegtem keilförmigen Stützring 32. Hierdurch wird die Blocklänge vergrößert und eine zunächst weichere Kennlinie im Anlaufverhalten erreicht. Nachdem die Kerbe soweit zusammengedrückt ist, das der eingelegte keilförmige Stützring beidseitig eingeklemmt ist, erfolgt eine sprunghafte Erhöhung der Federsteifigkeit bzw. ein Überspringen auf Blocklänge bzw. Anschlag-Endlänge.

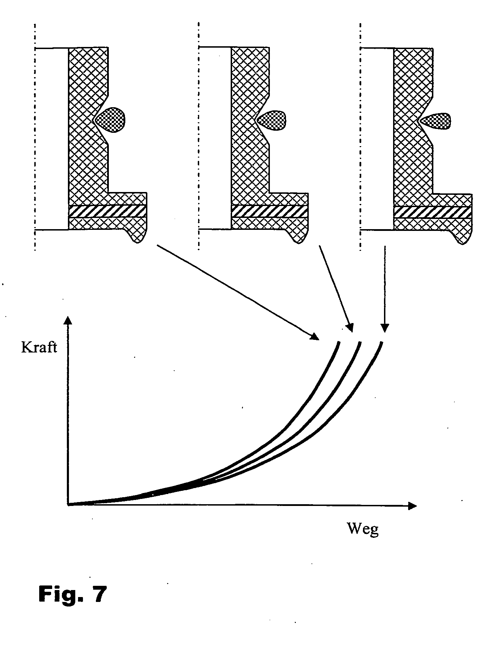

Fig. 7 zeigt noch einmal beispielhaft und anhand einer Zusammenstellung den Einfluss einer sich ändernden Stützringkontur auf die Kennlinie des Zuganschlages, wenn der Nutquerschnitt/Kerbquerschnitt konstant gehalten wird.

### Bezugszeichenliste

### (Teil der Beschreibung)

- 1: Luftfeder- und Dämpfereinheit
- 2: Arbeitsraum
- 3: Arbeitsraum
- 4: Zylindrisches Gehäuse
- 5: Kolbenstange
- 6: Kolben
- 7 - 9: Rollbalg
- 10 - 12: Fläche mit Abrollkontur
- 13: Anschlusspunkt
- 14: Druckanschlag
- 15: Zuganschlag
- 16: Federzylinder
- 17: Federkragen
- 18: Anschlagplatte
- 19: Verstärkungselement / Stahlscheibe
- 20: Klemmverbindung
- 21: Zuganschlag
- 22: Dreieckskerbe
- 23: Stützring
- 24: Zuganschlag
- 25: Lange Dreieckskerbe
- 26: Zuganschlag
- 27: Nut mit kurvenförmigem Nutgrund
- 28: Zuganschlag
- 29: Doppelnut
- 30: Zuganschlag
- 31: Kurze Dreieckskerbe
- 32: Stützring

## Patentansprüche

1. Luftfeder- und Dämpfereinheit für Fahrwerke von Fahrzeugen mit mindestens zwei mit Druckluft gefüllten und teilweise durch Rollbälge begrenzten Arbeitsräumen, wobei die Arbeitsräume (2,3) übereinander und innerhalb eines gemeinsamen topfförmigen rotationssymmetrischen Gehäuses (4) angeordnet sind, wobei ein innerhalb des rotationssymmetrischen Gehäuses (4) axial beweglicher und am Kopfende einer Kolbenstange (5) befindlicher rotationssymmetrischer Kolben (6) die Arbeitsräume trennt, wobei die Arbeitsräume untereinander über im Kolben befindliche durchströmbare Drosselventile verbunden sind, so dass ein Arbeitsraum (2) auf der Kolbenvorderseite und ein Arbeitsraum (3) auf der Kolbenrückseite angeordnet ist und die Kolbenstange (5) teilweise umgibt, dass der Kolben (6) und die Kolbenstange (5) jeweils durch Rollbälge (7, 8, 9) innerhalb des Gehäuses (4) abgedichtet und geführt werden, wobei zwischen Kolben (6) und rotationssymmetrischem Gehäuse (4) ein zur Kolbenvorderseite abdichtender erster Rollbalg (7) sowie ein zur Kolbenrückseite abdichtender zweiten Rollbalg (8) angeordnet ist, und dass zwischen Kolbenstange (5) und rotationssymmetrischem Gehäuse (4) ein vom Kolben (6) beabstandeter dritter Rollbalg (9) angeordnet ist, wobei zwischen Kolben und Gehäuse eine auf die Kolbenvorderseite wirkende Zusatzfeder als Druckanschlag und eine auf die Kobenrückseite wirkende Zusatzfeder als Zuganschlag ausgebildet sind, **dadurch gekennzeichnet, dass** der Zuganschlag (15) im Wesentlichen als gestufter, hohlzylindrischer und die Kolbenstange umgebender Federkörper ausgebildet ist, der Zuganschlag an seinem kolbenseitigen Ende einen ersten Außendurchmesser aufweist und an der Kolbenrückseite und/oder an den benachbarten Bereichen der Kolbenstange befestigt ist, dass der Zuganschlag an seinem kolbenfernen Ende einen zweiten größeren Außendurchmesser zur Anlage an eine mit dem Gehäuse verbundene Zuganschlagsplatte aufweist, und dass im Durchmesserübergangsbereich des Zuganschlages Verstärkungselemente (19) angeordnet sind.

2. Luftfeder- und Dämpfereinheit nach Anspruch 1, **dadurch gekennzeichnet, dass** als Verstärkungselement im Durchmesserübergangsbereich und innerhalb des Zuganschlages eine ringförmige Scheibe aus im Vergleich zum Zuganschlag unelastischem Material angeordnet ist.

3. Luftfeder- und Dämpfereinheit nach Anspruch 1 oder 2, **dadurch gekennzeichnet, dass** der Innendurchmesser der Scheibe im Wesentlichen dem kleinsten Innendurchmesser des Zuganschlages und der Außendurchmesser der Scheibe im Wesentlichen dem größten Außendurchmesser des Zuganschlages entspricht.

4. Luftfeder- und Dämpfereinheit nach Anspruch 1 bis 3, **dadurch gekennzeichnet, dass** die Scheibe aus Stahl besteht und durch Vulkanisation im Zuganschlag eingebettet ist.

5. Luftfeder- und Dämpfereinheit nach Anspruch 1 bis 4, **dadurch gekennzeichnet, dass** der Zuganschlag (15, 21, 24, 26, 28, 30) aus Schaumkunststoff besteht und im Bereich des ersten Außendurchmessers Form- und/oder Materialunstetigkeiten zur Veränderung der Federkennlinie des Zuganschlages aufweist.

6. Luftfeder- und Dämpfereinheit nach Anspruch 1 bis 5, **dadurch gekennzeichnet, dass** der Zuganschlag im Bereich des ersten Außendurchmessers Querschnittsveränderungen in Form von Umfangskerben oder -nuten (22, 25, 27, 29, 31) aufweist.

7. Luftfeder- und Dämpfereinheit nach Anspruch 1 bis 6, **dadurch gekennzeichnet, dass** im Bereich des ersten Außendurchmessers den Zuganschlag umgebende und im Vergleich zu letzterem weniger elastische Stützringe (23, 32) angeordnet sind.

8. Luftfeder- und Dämpfereinheit nach Anspruch 1 bis 7, **dadurch gekenntzeichnet, dass** die Stützringe aus Stahl bestehen und durch Vulkanisation im Außenbereich des ersten Außendurchmessers des Zuganschlages eingebettet sind.

9. Luftfeder- und Dämpfereinheit nach Anspruch 1 bis 8, **dadurch gekennzeichnet, dass** die Stützringe in den Umfangskerben- oder -nuten angeordnet sind.

## Claims

1. Pneumatic-spring and damper unit for chassis of vehicles, with at least two working spaces filled with compressed air and partially delimited by concertinas, the working spaces (2, 3) being arranged one above the other and inside a common pot-shaped rotationally symmetrical housing (4), a rotationally symmetrical piston (6), which is axially movable inside the rotationally symmetrical housing (4) and is located at the head end of a piston rod (5), separating the working spaces, the working spaces being connected to one another via throughflow throttle valves located in the piston, so that a working space (2) is arranged on the piston front side and a working space (3) is arranged on the piston rear side and partially surrounds the piston rod (5), that the piston (6) and the piston rod (5) are in each case sealed off and guided inside the housing (4) by means of concertinas (7, 8, 9), there being arranged between the piston (6) and rotationally symmetrical housing (4) a first concertina (7) sealing off with respect to the piston front side and a second concertina (8) sealing off with respect to the piston rear side, and that a third concertina (9) spaced apart from the piston (6) is arranged between the piston rod (5) and rotationally symmetrical housing (4), an additional spring which acts on the piston front side being formed between the piston and housing as a compression stop and an additional spring which acts on the piston rear side being formed as a tension stop, **characterized in that** the tension stop (15) is designed essentially as a stepped hollow-cylindrical spring body surrounding the piston rod, and the tension stop has a first outside diameter at its piston-side end and is fastened to the piston rear side and/or to the adjacent regions of the piston rod, **in that** the tension stop has at its piston-distant end a second larger outside diameter for bearing against a tension-stop plate connected to the housing, and **in that** reinforcing elements (19) are arranged in the diameter transition region of the tension stop.

2. Pneumatic-spring and damper unit according to Claim 1, **characterized in that** an annular disc consisting of material which is inelastic in comparison with the tension stop is arranged as a reinforcing element in the diameter transition region and inside the tension stop.

3. Pneumatic-spring and damper unit according to Claim 1 or 2, **characterized in that** the inside diameter of the disc corresponds essentially to the smallest inside diameter of the tension stop and the outside diameter of the disc corresponds essentially to the largest outside diameter of the tension stop.

4. Pneumatic-spring and damper unit according to Claims 1 to 3, **characterized in that** the disc consists of steel and is embedded in the tension stop by vulcanization.

5. Pneumatic-spring and damper unit according to Claims 1 to 4, **characterized in that** the tension stop (15, 21, 24, 26, 28, 30) consists of foam plastic and in the region of the first outside diameter has dimensional and/or material discontinuities for varying the spring characteristic curve of the tension stop.

6. Pneumatic-spring and damper unit according to Claims 1 to 5, **characterized in that** the tension stop has in the region of the first outside diameter variations in cross section in the form of circumferential notches or circumferential grooves (22, 25, 27, 29, 31).

7. Pneumatic-spring and damper unit according to Claims 1 to 6, **characterized in that** supporting rings (23, 32) surrounding the tension stop and having lower elasticity in comparison with the latter are arranged in the region of the first outside diameter.

8. Pneumatic-spring and damper unit according to Claims 1 to 7, **characterized in that** the supporting rings consist of steel and are embedded in the outer region of the first outside diameter of the tension stop by vulcanization.

9. Pneumatic-spring and damper unit according to Claims 1 to 8, **characterized in that** the supporting rings are arranged in the circumferential notches or circumferential grooves.

## Revendications

1. Unité de suspension et d'amortisseur pneumatique pour châssis de véhicules, comprenant au moins deux chambres de travail remplies d'air sous pression et limitées en partie par des soufflets roulants, les chambres de travail (2, 3) étant disposées l'une au-dessus de l'autre et à l'intérieur d'un boîtier commun (4) en forme de pot et à symétrie de révolution, un piston (6) à symétrie de révolution, déplaçable axialement à l'intérieur du boîtier (4) à symétrie de révolution et se trouvant à l'extrémité de tête d'une tige de piston (5) divisant les chambres de travail, les chambres de travail étant connectées les unes aux autres par le biais de soupapes d'étranglement pouvant être parcourues par l'écoulement et situées dans le piston, de sorte qu'une chambre de travail (2) soit disposée du côté avant du piston et qu'une chambre de travail (3) soit disposée du côté arrière du piston et entoure partiellement la tige de piston (5), que le piston (6) et la tige de piston (5) soient à chaque fois étanchés et guidés par des soufflets roulants (7, 8, 9) à l'intérieur du boîtier (4), un premier soufflet roulant (7) réalisant l'étanchéité vers le côté avant du piston et un deuxième soufflet roulant (8) réalisant l'étanchéité vers le côté arrière du piston étant disposés entre le piston (6) et le boîtier (4) à symétrie de révolution, et qu'entre la tige de piston (5) et le boîtier (4) à symétrie de révolution, soit disposé un troisième soufflet roulant (9) espacé du piston (6), un ressort supplémentaire agissant sur le côté avant du piston sous forme de butée de pression et un ressort supplémentaire agissant sur le côté arrière du piston sous forme de butée de traction étant réalisés entre le piston et le boîtier, **caractérisée en ce que** la butée de traction (15) est réalisée essentiellement sous forme de corps de ressort étagé, cylindrique creux et entourant la tige de piston, la butée de traction présente sur son extrémité du côté du piston un premier diamètre extérieur et est fixée sur le côté arrière du piston et/ou sur les régions adjacentes de la tige de piston, **en ce que** la butée de traction présente, sur son extrémité éloignée du piston, un deuxième diamètre extérieur plus grand pour l'application contre une plaque de butée de traction connectée au boîtier, et **en ce que** des éléments de renforcement (19) sont disposés dans la région de transition de diamètre de la butée de traction.

2. Unité de suspension et d'amortisseur pneumatique selon la revendication 1, **caractérisée en ce que** l'on dispose en tant qu'élément de renforcement dans la région de transition de diamètre et à l'intérieur de la butée de traction, un disque de forme annulaire en un matériau non élastique par comparaison avec la butée de traction.

3. Unité de suspension et d'amortisseur pneumatique selon la revendication 1 ou 2, **caractérisée en ce que** le diamètre intérieur du disque correspond essentiellement au plus petit diamètre intérieur de la butée de traction et le diamètre extérieur du disque correspond essentiellement au plus grand diamètre extérieur de la butée de traction.

4. Unité de suspension et d'amortisseur pneumatique selon les revendications 1 à 3, **caractérisée en ce que** le disque se compose d'acier et est noyé par vulcanisation dans la butée de traction.

5. Unité de suspension et d'amortisseur pneumatique selon les revendications 1 à 4, **caractérisée en ce que** la butée de traction (15, 21, 24, 26, 28, 30) se compose de plastique alvéolaire et présente, dans la région du premier diamètre extérieur, des irrégularités de forme et de matériau pour modifier la caractéristique de ressort de la butée de traction.

6. Unité de suspension et d'amortisseur pneumatique selon les revendications 1 à 5, **caractérisée en ce que** la butée de traction présente, dans la région du premier diamètre extérieur, des modifications de section transversale en forme d'encoches ou de rainures périphériques (22, 25, 27, 29, 31).

7. Unité de suspension et d'amortisseur pneumatique selon les revendications 1 à 6, **caractérisée en ce que** dans la région du premier diamètre extérieur sont disposées des bagues de support (23, 32) entourant la butée de traction et moins élastique par rapport à cette dernière.

8. Unité de suspension et d'amortisseur pneumatique selon les revendications 1 à 7, **caractérisée en ce que** les bagues de support se composent d'acier et sont noyées par vulcanisation dans la région extérieure du premier diamètre extérieur de la butée de traction.

9. Unité de suspension et d'amortisseur pneumatique selon les revendications 1 à 8, **caractérisée en ce que** les bagues de support sont disposées dans les encoches ou les rainures périphériques.
